# EUROPÄISCHE PATENTSCHRIFT

(11) **EP 1 570 243 B1**
(45) Veröffentlichungstag und Bekanntmachung des Hinweises auf die Patenterteilung: **01.02.2012**
(21) Anmeldenummer: 03780132.1
(22) Anmeldetag: 06.12.2003
(51) Int. Cl.: G01F 23/296

(54) **VORRICHTUNG ZUM BETREIBEN EINER SCHWINGFÄHIGEN EINHEIT EINES VIBRATIONSRESONATORS**
DEVICE FOR OPERATING A VIBRATING UNIT OF A VIBRATION RESONATOR
DISPOSITIF PERMETTANT DE FAIRE FONCTIONNER UNE UNITE VIBRANTE D'UN RESONATEUR VIBRANT

(30) Priorität: 13.12.2002 DE 10258736
(43) Veröffentlichungstag der Anmeldung: 07.09.2005
(60) Teilanmeldung: 11178743.8
(73) Patentinhaber: Endress + Hauser GmbH + Co. KG, 79689 Maulburg (DE)
(72) Erfinder: D'ANGELICO, Sascha, 79595 Rümmingen (DE)
(74) Vertreter: Andres, Angelika Maria
(86) Internationale Anmeldenummer: PCT/EP2003/013842
(87) Internationale Veröffentlichungsnummer: WO 2004/055485

(56) Entgegenhaltungen:
- DE-A1- 19 621 449
- US-A- 3 800 170
- US-A- 4 578 650

## Beschreibung

Die Erfindung bezieht sich auf eine Vorrichtung zum Betreiben einer schwingfähigen Einheit eines Vibrationsresonators mit einem Piezoantrieb, der mit der schwingfähigen Einheit verbunden ist, und einer Rückkoppelelektronik, wobei die Rückkoppelelektronik den Piezoantrieb mittels eines periodischen Erregersignals mit ansteigenden und abfallenden Flanken zu Schwingungen anregt und wobei ein Antwortsignal des Piezoantriebs der Rückkoppelelektronik rückgeführt wird, und mit mindestens einer Peakkompensationseinheit, die mindestens ein Störsignal, das sich aus dem Umladevorgang des Piezoantriebs ergibt, aus dem Antwortsignal ausblendet.

Aus der Patentschrift DE 196 21 449 ist eine Vorrichtung bekannt, mit der ein Vibrations-Füllstand-Grenzschalter mit einem Vibrationsresonator betrieben werden kann, welcher in den Rückkopplungszweig eines selbsterregbaren Wandlersystems mit Verstärkeranordnung geschaltet ist. Dabei ist in dem Vibrationsresonator ein Piezoelement sowohl zur Schwingungserregung als auch zur Schwingungsdetektion vorgesehen. Bei dem Erregersignal der Verstärkeranordnung, mit dem das Piezoelement zu Schwingungen angeregt wird, handelt es sich um periodische Rechtecksignale. Während der Flanken des Erregersignals wird das Piezoelement umgeladen, was zu Umladesignalen im Antwortsignal des Piezoelements führt. Die in der Schrift vorgestellte Schaltung hat die Aufgabe, diese Umladesignale auszublenden und den Umladevorgang zeitlich zu minimieren. Für die Aufgabe des Ausblendens wird eine Steuerschaltung vorgestellt, die vom Erregersignal gesteuert wird und die den Ausgang des Piezoelements von der Verstärkeranordnung abkoppelt. Die Minimierung der Dauer des Umladevorgangs wird durch eine Ladestromregelschaltung erreicht, die ein virtuelles Bezugspotential erzeugt. Beide Schaltungen weisen u.a. OP-Verstärker und einen Halbleiterumschalter auf. Nachteilig an dieser Vorrichtung ist, dass es sich z.B. bei den zuvor genannten Bauteilen um relativ kostenintensive Bauteile handelt.

Die Patentschrift US 4,578,650 beschreibt eine elektronische Antriebsschakung, welche beispielsweise in Vibrationssensoren einsetzbar ist. Um die während des Umladevorgangs des piezoelektrischen Antriebselements auftretenden Störungen im Ausgangssignal zu eliminieren, wird das Ausgangssignal während des Umladevorgangs ausgeblendet. Das Ausgangssignal entspricht dem am Ausgang eines Differenzverstärkers anliegenden Signal und ist von der über einen zur Strom-Spannungs-Wandlung dienenden Widerstand abfallende Spannung abhängig. Zur kurzzeitigen Ausblendung des Signals wird der Widerstand überbrückt, sodass die beiden Eingangsspannungen des Differenzverstärkers gleich sind.

Der Erfindung liegt die Aufgabe zugrunde, eine Vorrichtung anzugeben, mit der das Störsignal des Umladevorgangs aus dem Antworksignal des Piezoantriebs ausgeblendet wird. Dies soll durch eine Ausgestaltung mit möglichst wenigen und preisgünstigen Bauteilen geschehen.

Die Erfindung löst diese Aufgabe dadurch, dass in der Peakkompensationseinheit mindestens eine Unterdrückungseinheit mit mindestens einem Schaltelement vorgesehen ist, das durch das Erregersignal der Rückkoppelelektronik derart gesteuert wird, dass der Piezoantrieb während der ansteigenden und/oder während der abfallenden Flanken des Erregersignals leitend mit Masse verbunden ist.

Die Idee der Erfindung ist, während der Flanken des Erregersignals, d.h. während der Zeiten, zu denen die Störsignale verursacht werden, über die Peakkompensationseinheit den Piezoantrieb gegen Masse kurzzuschließen. Dadurch gelangt zum einen das Antwortsignal während dieser Flanken nicht zur Rückkoppelelektronik, wodurch die Umladesignale ausgeblendet sind. Zum anderen minimiert sich der Gesamtwiderstand, mit dem der Piezoantrieb ein RC-Glied bildet. Dies hat auch den Vorteil, dass die Umladezeit des Piezoantriebs minimiert wird. Der Gesamtwiderstand besteht speziell aus einem Widerstand, der nachfolgend erklärt werden wird (Strom-zu-Spannungswandler), und aus zusätzlichen Innenwiderständen der Schaltung, die beispielsweise aus Gründen des Explosionsschutzes erforderlich sein können.

Die erste Ausgestaltung der Erfindung beschreibt eine Vorrichtung zum Betreiben einer schwingfähigen Einheit eines Vibrationsresonators mit einem Piezoantrieb und einer Rückkoppelelektronik. Die Rückkoppelelektronik regt den Piezoantrieb mittels eines periodischen Erregersignals mit ansteigenden und abfallenden Flanken zu Schwingungen an. Dadurch wird die mechanisch schwingfähige Einheit, die mit dem Piezoantrieb verbunden ist, zu Schwingungen angeregt. Bei dem Erregersignal kann es sich in einer vorteilhaften Ausgestaltung um ein periodisches Rechtecksignal handeln. Möglich sind als mechanisch schwingfähige Einheit z.B. eine Schwinggabel oder ein Schwingstab. Durch die Schwingung der mechanisch schwingfähigen Einheit liefert der Piezoantrieb ein Antwortsignal, das der Rückkoppelelektronik rückgeführt wird. Dieses Antwortsignal setzt sich zusammen aus dem eigentlichen Schwingungsdetektionssignal und einem Störsignal. Das Schwingungsdetektionssignal lässt z.B. über die Frequenz Aussagen darüber zu, ob ein Füllstand von einem Medium in einem Behälter erreicht worden ist. Dafür wird ausgenutzt, dass sich die Resonanzfrequenz der schwingfähigen Einheit ändert, wenn sie von einem Medium bedeckt ist, im Vergleich zur Frequenz, wenn sie frei schwingt. Der andere Anteil im Antwortsignal ist ein Störsignal, das sich durch das Umladen des Piezoantriebs immer dann ergibt, wenn sich das Vorzeichen der Spannungsänderung ändert. Eine Änderung des Vorzeichens der Spannungsänderung bedeutet z.B. dass die Spannung von einem positiven zu einem negativen Vorzeichen wechselt und umgekehrt oder dass die Spannung von einem größeren zu einem kleineren Wert wechselt und umgekehrt. Das Umladen ist darauf zurückzuführen, dass der Piezoantrieb u.a. auch die Eigenschaft eines Kondensators aufweist. Dieses Signal zeigt einen deutlichen Anstieg und nimmt dann exponentiell ab, wobei die Zeitkonstante (t1) sich aus der Kapazität des Piezoantriebs und dem Gesamtwiderstand ergibt, mit dem der Piezoantrieb ein RC-Glied bildet. Sind die ansteigenden und abfallenden Flanken des Erregersignals sehr steil, so verkürzt sich der Zeitraum des Umladevorgangs. Das Abklingen des Störsignals ist jedoch, wie bereits erwähnt, durch die Bauteile gegeben. Somit ergeben sich auch das Hauptziel der Erfindung, indem das Störsignal herausgefiltert wird. Dies wird durch eine Peakkompensationseinheit erreicht, die das Störsignal, das sich aus dem Umladevorgang des Piezoantriebs ergibt, aus dem Antwortsignal ausblendet. Ein weiterer Vorteil der Peakkompensationseinheit ist, dass gleichzeitig die Dauer des Umladevorgangs des Piezoantriebs minimiert wird. In der Peakkompensationseinheit findet sich mindestens eine Unterdrückungseinheit mit mindestens einem Schaltelement, das durch das Erregersignal der Rückkoppelelektronik gesteuert wird. Der Effekt der Peakkompensationseinheit besteht darin, dass der Piezoantrieb während der ansteigenden und/oder während der abfallenden Flanken des Erregersignals leitend mit Masse verbunden ist. Die ganze Problematik entsteht dadurch, dass ein Piezoantrieb sowohl für die Schwingungsanregung als auch für die Schwingungsdetektion verwendet wird. Werden die Anregung und die Detektion durch zwei piezo-elektrische Elemente realisiert, so findet eine Verbindung der beiden Elemente nur durch die mechanisch schwingfähige Einheit statt. Dadurch hat das Umladesignal der anregenden Einheit nur zu vernachlässigende Auswirkungen auf die mechanisch schwingfähige Einheit und wird vor allem nicht von der detektierenden Einheit mitdetektiert. Somit ist bei getrennter Anregung und Detektion die Anwendung der Erfindung nicht erforderlich.

Eine Ausgestaltung sieht einen Strom-zu-Spannungswandler vor. Über diesen wird das Antwortsignal, das ein Stromsignal ist, in ein Spannungssignal umgewandelt. Eine kostengünstige Ausgestaltung realisiert dies über einen Widerstand, der an Masse liegt.

In einer vorteilhaften Ausgestaltung ist in der Peakkompensationseinheit ein Widerstand vorgesehen, der derartig dimensioniert ist, dass die Zeitkonstante (t1) der Dauer des Umladevorgangs des Piezoantriebs minimiert wird. Dabei kann der Widerstand auch fortgelassen werden, d.h. er hätte einen Widerstand von Null Ohm, wobei jedoch - hier nicht näher bestimmte - aus Gründen des Explosionsschutzes erforderliche Widerstände oder sonstige Innenwiderstände der Bauteile noch zu beachten sind. Der Vorteil dieses möglichst geringen Widerstandes ist, dass die Zeitkonstante (t1) der Dauer des Umladevorgangs minimiert wird, da die Konstante von der Kapazität des Kondensators und dem Widerstandswert des mit dem Kondensator ein RC-Glied bildenden Widerstands abhängt.

Eine vorteilhafte Ausgestaltung ist symmetrisch und sieht in der Peakkompensationseinheit zwei Unterdrückungseinheiten vor. Dabei wird die erste Unterdrückungseinheit durch die abfallenden Flanken und die zweite Unterdrückungseinheit durch die ansteigenden Flanken des Erregersignals gesteuert.

Gemäß einer günstigen Ausgestaltung ist in der Peakkompensationseinheit mindestens ein Differenzierelement vorgesehen, an dem das Erregersignal anliegt und welches das Schaltelement steuert, wobei die Ausgangsspannung des Differenzierelements die Ableitung des Erregersignals darstellt. Dies ermöglicht die einfache Steuerung des Schaltelements. Eine einfache und kostensparende Ausgestaltung ist, dass es sich bei dem Differenzierelement um ein RC-Glied handelt mit einem Kondensator und einem Widerstand.

Die Abschnitte des Antwortsignals, in denen sich die Umladesignale finden, gelangen nicht zur Rückkoppelelektronik, indem sie durch die Peakkompensationseinheit, die durch das Erregersignal gesteuert wird, ausgeblendet werden. Das Antwortsignal wird auf Masse gegeben. Das Antwortsignal wird also quasi mit einer Kamm-Funktion multipliziert, die mit Ausnahme der Abschnitte mit Peak konstant mit einem Wert ungleich Null und zu den Zeiten dieser Abschnitte Null ist. Die Synchronisierung von Antwortsignal und dieser Funktion geschieht dadurch, dass das Erregersignal nicht nur an den Piezoantrieb, sondern auch an die Peakkompensationseinheit gegeben wird.

Eine günstige Ausführung beinhaltet, dass es sich bei dem Schaltelement um ein elektrisches Bauteil handelt, das seine Leitfähigkeit in Abhängigkeit von einer anliegenden Spannung ändert. In der ersten Ausgestaltung ist dieses Schaltelement in der Unterdrückungseinheit vorhanden. Ein Vorteil ist, dass so mit dem Erregersignal, bzw. mit dessen Ableitung gearbeitet werden kann. Eine sehr einfache und kostenbewusste Ausgestaltung sieht vor, dass es sich bei dem Schaltelement um einen Halbleiterschalter, z.B. um einen Feldeffekttransistor allgemein oder speziell um einen MQSFET handelt. Zum Schutz des Schalterelements ist für das Schaltelement mindestens ein Schutzelement vorgesehen, dass das Schaltelement vor zu hohen Spannungen und/oder vor Spannungen mit dem Vorzeichen schützt, bei dem sich die Leitfähigkeit des Schaltelements nicht ändert, indem es nur Spannungen mit positivem oder negativem Vorzeichen zum Schaltelement gelangen lässt. Als Schutzelemente lassen sich beispielsweise Dioden verwenden, die je nach Vorzeichen der an ihnen anliegenden Spannung den Kondensator des RC-Glieds in den Diffenenzierelementen direkt gegen Masse kurzschließen, so dass das Signal des RC-Glieds am Schaltelement sehr schnell abnimmt.

Vorteilhaft ist eine Ausgestaltung, bei der es sich bei dem Erregersignal um ein periodisches Rechtecksignal oder um ein periodisches trapezförmiges Signal handelt. Durch die Steilheit der Flanken wird der Umladevorgang zeitlich stärker begrenzt als bei einem Erregersignal mit flachen Flanken. Der Nachteil eines Rechtecksignals besteht darin, dass auch Oberwellenresonanzen angeregt werden können. Dies wird bei trapezförmigen Signalen vermieden.

Die Erfindung wird anhand der nachfolgenden Zeichnungen näher erläutert. Es zeigt:
- Fig. 1:: ein Blockschaltbild des Vibrationsresonators;
- Fig. 2:: ein Blockschaltbild der ersten Ausgestaltung der erfindungsgemäßen Vorrichtung zum Betreiben der schwingfähigen Einheit eines Vibrationsresonators;
- Fig. 3:: eine Blockschaltbild einer weiteren Ausgestaltung der Vorrichtung;
- Fig. 4:: den zeitlichen Verlauf einiger Signale.

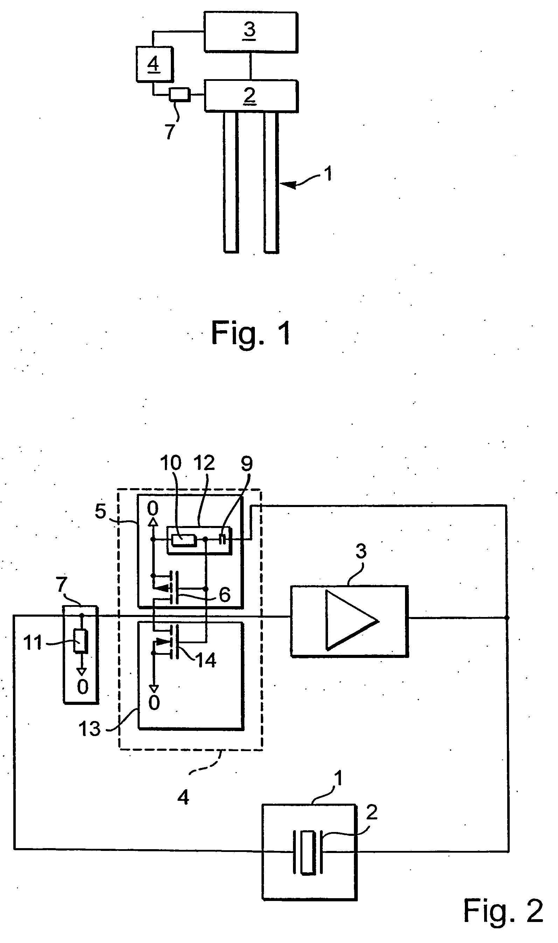

Figur 1 verdeutlicht den prinzipiellen Aufbau des Vibrationsresonators. Die schwingfähige Einheit 1 ist mit dem Piezoantrieb 2 verbunden. Dieser Piezoantrieb 2 wird durch die Rückkoppelelektronik 3 zu Schwingungen angeregt, wodurch wiederum die mechanisch schwingfähige Einheit 1 in Schwingung versetzt wird. Der Piezoantrieb 2 detektiert dann die Schwingungen der mechanisch schwingfähigen Einheit 1 und überträgt das Antwortsignal 21 über den Strom-zu-Spannungswandler 7 und die Peakkompensationseinheit 4 auf die Rückkoppelelektronik 3. Gezeigt ist für die mechanisch schwingfähige Einheit eine Schwinggabel, die Verwendung eines Schwingstabes wäre jedoch ebenfalls möglich.

Figur 2 zeigt ein Blockschaltbild für eine bevorzugte Realisierung der Vorrichtung zum Betreiben der schwingfähigen Einheit 1 eines Vibrationsresonators. In dieser Schaltung wurden nur die allernötigsten Bauteile für die Peakkompensationseinheit 4 verwendet. Die Rückkoppelelektronik 3 erzeugt das Erregersignal 20, welches den Piezoantrieb 2 als Teil der schwingfähigen Einheit 1 zu Schwingungen anregt. Bei dem Erregersignal 20 handelt es sich hier um ein Rechtecksignal. Möglich sind auch trapezförmige Signale, die die Erregung von höheren Moden oder Oberwellen der mechanisch schwingfähigen Einheit vermeiden. Durch die Schwingungen ergibt sich ein Antwortsignal 21 des Piezoantriebs 2, welches der Rückkoppelelektronik 3 rückgeführt wird.

Während der Flanken des Erregersignals 20, d.h. durch die Änderung des Vorzeichens der Spannungsänderung, wird der Piezoantrieb 2 umgeladen, und es ergibt sich ein Umladestromverlauf, der mit der Zeitkonstanten t1 exponentiell abnimmt. Im Antwortsignal 21 zeigt sich dieser Peak als Störsignal 22. Die Zeitkonstante t1 berechnet sich aus der Kapazität des Piezoantriebs 2 und aus einem Gesamtwiderstand, mit dem der Piezoantrieb 2 ein RC-Glied bildet. Dabei handelt es sich im gezeigten Beispiel um den Widerstand 11, sowie um weitere, nicht dargestellte Innenwiderstände der Schaltung, die beispielsweise aus Gründen des Explosionsschutzes erforderlich sein können. Diese hohen Umladesignale stellen für die Auswertung des Antwortsignals 21 eine Störung dar; relevant ist nur das Nutzsignal der schwingfähigen Einheit 1, das das Schwingungsdetektionssignal ist und z.B. aus dessen Frequenz und Amplitude sich physikalische Größen des Mediums bestimmen lassen. Das Störsignal 22 ergibt sich aus den Größen der verwendeten Bauteile und liefert keine Information bzgl. der interessierenden Messung.

Zur Unterdrückung des Störsignals 22 wird zunächst das Antwortsignal 21, das ein Stromsignal ist, über einen Strom-zu-Spannungswandler 7 in ein Spannungssignal umgewandelt. In der einfachsten Ausführung handelt es sich hierbei um einen Widerstand 11, der an Masse liegt. Hinter dem Strom-zu-Spannungswandler 7 befindet sich die Peakkompensationseinheit 4. Im gezeigten Fall sind zwei Unterdrückungseinheiten 5 und 13 vorgesehen. Die Unterdrückungseinheit 5 dient der Unterdrückung während der abfallenden Flanken des Erregersignals 20 und Unterdrückungseinheit 13 dient der Unterdrückung während der ansteigenden Flanken. Diese Unterdrückungseinheiten 5, 13 bestehen jeweils aus einem Schaltelement 6, 14 und werden von einem Differenzierelement 12 angesteuert, auf das das Erregersignal 20 der Rückkoppelelektronik 3 gegeben wird. In der gezeigten Ausgestaltung ist das Differenzierelement 12 ein RC-Glied, das aus einem Kondensator 9 und einem Widerstand 10 besteht. Beim Schaltelement 6 und 14 handelt es sich jeweils um einen Halbleiterschalter, beispielsweise um einen MOSFET. Die Halbleiterschalter, die in der Erfindung verwendet werden, sind deutlich kostengünstiger als z.B. die im Patent DE 196 21 449. Beispielsweise kann es sich auch um die Feldeffekttransistoren 2N7002 oder TP0610 handeln. Dies sind zwei Beispiele aus einer großen Auswahl. Die Schaltelemente 6, 14 der Unterdrückungseinheiten 5, 13 unterscheiden sich darin, welches Vorzeichen der anliegenden Spannung ein Durchschalten des Schaltelements bewirkt. Es handelt sich also z.B. um n- oder p-Kanal MOSFETs. In dieser speziellen Ausgestaltung sollte jedoch darauf geachtet werden, dass die Schaltelemente 6 und 14 durch die Spannungen mit dem jeweils anderen Vorzeichen keinen Schaden erleiden. Dies ist bei den genannten Feldeffekttransistoren 2N7002 oder TP0610 durch deren Eigenschaften gegeben.

Durch die Flanken des Erregersignals ergibt sich am RC-Glied 12 das Signal 24, das die Schaltelemente 6 und 14 steuert. Das Signal 24 stellt die Ableitung des Erregersignals 20 dar, somit arbeitet das RC-Glied 12 also als Differenzierelement. Weiterhin ähnelt das Signal den Störsignalen 22 des Piezoantriebs 2, da es ebenfalls aus dem Umladevorgang resultiert. Das Signal 24 nimmt mit der Zeitkonstanten t2 ab, die bestimmt ist durch die Kapazität des Kondensators 9 und des Widerstands 10. Wie nachfolgend noch gezeigt werden wird, sind die Schaltelemente 6, 14 jeweils so beschaffen, dass sie jeweils während der abfallenden bzw. ansteigenden Flanken ihre Leitfähigkeit ändern und somit den Piezoantrieb 2 gegen Masse kurzschließen. Der Kurzschluss geschieht solange, bis das Signal 24 unter einen bestimmten Schwellenwert gefallen ist, unter dem das Schaltelement 6 oder 14 nicht mehr leitend ist. Dieser Schwellenwert hängt von der Beschaffenheit der Schaltelemente 6, 14 ab. In dieser Zeit gelangt das Antwortsignal 21 nicht zur Rückkoppelelektronik 3. Weiterhin ist der Gesamtwiderstand des RC-Glieds, dessen Kapazität durch den Piezoantrieb 2 gegeben ist, minimiert und somit auch die Zeitkonstante t1 des Umladevorgangs des Piezoantriebs 2. Vorteilhaft ist es, die Zeit t2 mindestens gleich oder größer als t1 zu wählen, so dass die Störsignale 22 auf jeden Fall verlässlich aus dem Antwortsignal 21 herausgeschnitten werden.

Vorteile der Erfindung liegen darin, dass kostengünstige Bauteile verwendet werden, da u.a. auf OP-Verstärker, z.B. ein Analog-Schalter oder ein Exklusiv-Oder-Gatter verzichtet werden kann. Insgesamt werden für die Peakkompensationseinheit 4 und den Strom-zu-Spannungswandler 7 insgesamt zwei Widerstände, ein Kondensator und zwei Halbleiterschalter benötigt.

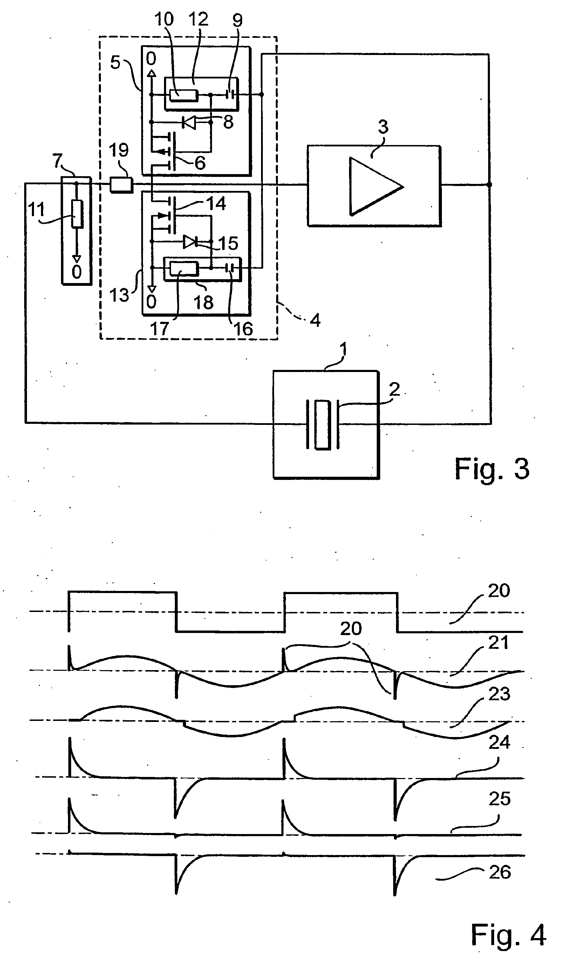

Figur 3 stellt eine erweiterte Ausgestaltung der Schaltung in Figur 2 vor. Die Erweiterungen bestehen darin, dass vor der Peakkompensationseinheit 4 ein Widerstand 19 geschaltet ist. Dieser begrenzt den Umladestrom des Piezoantriebs 2 und verhindert eine zu große Belastung der Rückkoppelelektronik 3. Während der Flanken des Erregersignals 20 wird dieser Widerstand 19 gegen Masse geschaltet und das Antwortsignal 21 gelangt nicht zur Rückkoppelelektronik 3. Da in diesem Fall der Widerstand 11 des Strom-zu-Spannungswandlers 7 und der Widerstand 19 beide gegen Masse geschaltet sind, liegen sie parallel und der Gesamtwiderstand ist kleiner als der kleinste Einzelwert. Somit ist dann auch die Umladezeit t1 des Piezoantriebs 2 minimiert.

Weiterhin ist in den Unterdrückungseinheiten 5, 13 jeweils ein Schutzelement 8, 15 vorgesehen. Im gezeigten Beispiel handelt es sich jeweils um eine Diode. Diese Schutzelemente 8, 15 begrenzen während der Zeiten außerhalb der Flanken des Erregersignals 20 die Spannung, die am jeweiligen Schaltelement 6, 14 anliegt, und schützen sie somit vor zu hohen Spannungen. Weiterhin wird verhindert, dass ein Spannung mit einem Vorzeichen zum Schaltelement gelangt, bei dem das Schaltelement 6, 14 nicht seinen Leitwert ändert. Somit können auch Halbleiterschalter verwendet werden, die Spannungen mit dem "falschen" Vorzeichen nicht vertragen. D.h. durch die zusätzlichen Dioden werden die Ansprüche an die Halbleiterschalter reduziert.

Zudem findet sich in beiden Unterdrückungseinheiten jeweils ein eigenes Differenzierelement 12, 18. Die Wahl der mit diesen Differenzierelementen 12, 18 verbundenen Zeitkonstanten t2, t3 sollte so sein, dass beide mindestens gleich oder größer als die Zeitkonstante t1 des Piezoantriebs 2 sind.

In Figur 4 sind die zeitlichen Verläufe der beteiligten Signale dargestellt. Das Erregersignal 20 ist im vorgestellten Fall ein Rechtecksignal mit steil ansteigenden und abfallenden Flanken. Bei der technischen Realisierung ergibt sich jedoch durch die Bauteile jeweils in Wirklichkeit eher ein trapezförmiger Verlauf. Das Antwortsignal 21 setzt sich zusammen aus dem Nutzsignal, das in diesem Fall sinusförmig ist, und den Störsignalen 22, die sich aus dem Umladen des Piezoantriebs 2 ergeben und welche exponentiell abnehmen. Durch die Peakkompensationseinheit 4 ergibt sich am Eingang der Rückkoppelelektronik 3 das Signal 23, aus welchem die Störsignale 22 ausgeblendet worden sind. Das Signal 24 ist das Signal des Differenzierelements 12 in der Ausgestaltung in Figur 1. Die Signale 25 und 26 sind die Signale der Differenzierelemente 18 und 12 in der Ausgestaltung in Figur 2. Bei diesen beiden Signalen 25, 26 sieht man auch sehr schön die Wirkung der Schutzelemente 8, 15, die in diesem Beispiel Dioden sind. Durch diese wird je nach Art der Flanke der Kondensator 9, 16 mit Masse kurzgeschlossen. Daher fällt das Signal fast sofort wieder gegen Null ab. Bei der jeweils anderen Flanke sperren die Dioden 8, 15 und die Kondensatoren 9, 16 bilden jeweils mit den Widerständen 10, 17 ein RC-Glied mit einer entsprechenden Zeitkonstante für den Abfall des Signals.

### Bezugszeichenliste

- 1: Schwingfähige Einheit
- 2: Piezoantrieb
- 3: Rückkoppelelektronik
- 4: Peakkompensationseinheit
- 5: Unterdrückungseinheit
- 6: Schaltelement
- 7: Strom-zu-Spannungswandler
- 8: Schutzelement
- 9: Kondensator
- 10: Widerstand
- 11: Widerstand
- 12: Differenzierelement
- 13: Unterdrückungseinheit
- 14: Schaltelement
- 15: Schutzelement
- 16: Kondensator
- 17: Widerstand
- 18: Differenzierelement
- 19: Widerstand

- 20: Erregersignal
- 21: Antwortsignal
- 22: Störsignal
- 23: Signal an der Rückkoppelelektronik
- 24: Signal des Differenzierelements
- 25: Signal des Differenzierelements
- 26: Signal des Differenzierelements

## Patentansprüche

1. Vorrichtung zum Betreiben einer schwingfähigen Einheit (1) eines Vibrationsresonators
mit einem Piezoantrieb (2), der mit der schwingfähigen Einheit (1) verbunden ist, und einer Rückkoppelelektronik (3),
wobei die Rückkoppelelektronik (3) den Piezoantrieb (2) mittels eines periodischen Erregersignals (20) mit ansteigenden und abfallenden Flanken zu Schwingungen anregt und
wobei ein Antwortsignal (21) des Piezoantriebs (2) der Rückkoppelelektronik (3) rückgeführt wird, und
mit mindestens einer Peakkompensationseinheit (4), die mindestens ein Störsignal (22), das sich aus dem Umladevorgang des Piezoantriebs (2) ergibt, aus dem Antwortsignal (21) ausblendet,
**dadurch gekennzeichnet,**
**dass** in der Peakkompensationseinheit (4) mindestens eine Unterdrückungseinheit (5, 13) mit mindestens einem Schaltelement (6, 14) vorgesehen ist, das durch das Erregersignal (20) der Rückkoppelelektronik (3) derart gesteuert wird, dass der Piezoantrieb (2) während der ansteigenden und/oder während der abfallenden Flanken des Erregersignals (20) leitend mit Masse verbunden ist.

2. Vorrichtung nach Anspruch 1,
**dadurch gekennzeichnet,**
**dass** es sich bei dem Antwortsignal (21) um ein Stromsignal handelt, und wobei ein Strom-zu-Spannungswandler (7) vorgesehen ist, der das Stromsignal in ein Spannungssignal umwandelt.

3. Vorrichtung nach Anspruch 1,
**dadurch gekennzeichnet,**
**dass** es sich bei dem Strom-zu-Spannungswandler (7) um einen Widerstand (11) handelt, der an Masse liegt.

4. Vorrichtung nach Anspruch 1,
**dadurch gekennzeichnet,**
**dass** in der Peakkompensationseinheit (4) ein Widerstand (19) vorgesehen ist, der derartig dimensioniert ist, dass die Zeitkonstante (t1) der Dauer des Umladevorgangs des Piezoantriebs minimiert wird.

5. Vorrichtung nach Anspruch 1,
**dadurch gekennzeichnet,**
**dass** eine erste Unterdrückungseinheit (5) und eine zweite Unterdrückungseinheit (13) in der Peakkompensationseinheit (4) vorgesehen sind,
wobei die erste Unterdrückungseinheit (5) durch die abfallenden Flanken und die zweite Unterdrückungseinheit (13) durch die ansteigenden Flanken des Erregersignals (20) gesteuert wird.

6. Vorrichtung nach Anspruch 1,
**dadurch gekennzeichnet,**
**dass** in der Peakkompensationseinheit (4) mindestens ein Differenzierelement (12, 18) vorgesehen ist, an dem das Erregersignal (20) anliegt und welches das Schaftelement (6, 14) steuert,
wobei die Ausgangsspannung des Differenzierelements (12, 18) die Ableitung des Erregersignals (20) darstellt.

7. Vorrichtung nach Anspruch 1,
**dadurch gekennzeichnet,**
**dass** es sich bei dem Schaltelement (6, 14) um ein elektrisches Bauteil handelt, das seine Leitfähigkeit in Abhängigkeit von einer anliegenden Spannung ändert.

## Claims

1. Apparatus to operate a unit (1), which is capable of oscillation, of a vibration resonator with a piezo drive (2) that is connected to the unit (1), which is capable of oscillation, and feedback electronics (3),
wherein the feedback electronics (3) stimulate the piezo drive (2) to cause it to vibrate using a periodic excitation signal (20) with rising and falling edges, and
wherein a response signal (21) of the piezo drive (2) is reported back to the feedback electronics (3), and
with at least one peak compensation unit (4), which masks out at least one interference signal (22) from the response signal (21), said interference signal resulting from the charge-reversal process of the piezo drive (2),
**characterized in that**
at least one suppression unit (5, 13) with a least one switching element (6, 14) is provided in the peak compensation unit (4), said element being controlled by the excitation signal (20) of the feedback electronics (3) in such a way that the piezo drive (2) is conductively connected to ground during the rising and/or falling edges of the excitation signal (20).

2. Apparatus as claimed in Claim 1,
**characterized in that**
the response signal (21) is a current signal, and wherein a current-to-voltage converter (7) is provided which converts the current signal to a voltage signal.

3. Apparatus as claimed in Claim 1,
**characterized in that**
the current-to-voltage converter (7) is a resistor (11) which is connected to ground.

4. Apparatus as claimed in Claim 1,
**characterized in that**
a resistor (19) is provided in the peak compensation unit (4) which is sized in such a way that the time constant (t1) of the duration of the charge-reversal process of the piezo drive is minimized.

5. Apparatus as claimed in Claim 1,
**characterized in that**
a first suppression unit (5) and a second suppression unit (13) are provided in the peak compensation unit (4),
wherein the first suppression unit (5) is controlled by the falling edges and the second suppression unit (13) by the rising edges of the excitation signal (20).

6. Apparatus as claimed in Claim 1,
**characterized in that**
the peak compensation unit (4) accommodates at least one differentiation element (12, 18) to which the excitation signal (20) is applied and which controls the switching unit (6, 14),
wherein the output voltage of the differentiation element (12, 18) is the derivative of the excitation signal (20).

7. Apparatus as claimed in Claim 1,
**characterized in that**
the switching element (6, 14) constitutes an electrical component which changes its conductivity depending on the voltage applied.

## Revendications

1. Dispositif destiné à l'exploitation d'une unité apte à vibrer (1) d'un résonateur de vibrations
avec un entraînement piézoélectrique (2), lequel est relié avec l'unité apte à vibrer (1), et une électronique d'asservissement (3),
l'électronique d'asservissement (3) excitant en vibrations l'entraînement piézoélectrique (2) au moyen d'un signal d'excitateur (20) périodique présentant des fronts montants et descendants, et
un signal de réponse (21) de l'entraînement piézoélectrique (2) de l'électronique d'asservissement (3) étant retourné, et
avec au moins une unité de compensation de pointe (4), qui supprime du signal de réponse (21) au minimum un signal parasite (22), qui résulte du processus de transfert de l'entraînement piézoélectrique (2),
**caractérisé en ce**
**qu'**est prévue, dans l'unité de compensation de pointe (4), au moins une unité de suppression (5, 13) avec au moins un élément de commutation (6, 14), qui est commandé par le signal d'excitateur (20) de l'électronique d'asservissement (3) de telle manière que l'entraînement piézoélectrique (2) est relié par une liaison conductrice à la masse pendant les fronts montants et/ou pendant les fronts descendants du signal d'excitateur (20).

2. Dispositif selon la revendication 1,
**caractérisé en ce**
**que**, concernant le signal de réponse (21), il s'agit d'un signal de courant, et un convertisseur courant-tension (7), qui convertit le signal de courant en un signal de tension, étant prévu.

3. Dispositif selon la revendication 1,
**caractérisé en ce**
**que**, concernant le convertisseur courant-tension (7), il s'agit d'une résistance (11), qui est reliée à la masse.

4. Dispositif selon la revendication 1,
**caractérisé en ce**
**qu'**est prévue dans l'unité de compensation de pointe (4) une résistance (19), qui est dimensionnée de telle manière que soit minimisée la constante de temps (t1) de la durée du processus d'inversion de charge de l'entraînement piézoélectrique.

5. Dispositif selon la revendication 1,
**caractérisé en ce**
**que** sont prévus une première unité de suppression (5) et une deuxième unité de suppression (13) dans l'unité de compensation de pointe (4),
la première unité de suppression (5) étant commandée par les fronts descendants et la deuxième unité de suppression (13) par les fronts montants du signal d'excitateur (20).

6. Dispositif selon la revendication 1,
**caractérisé en ce**
**qu'**est prévu dans l'unité de compensation de pointe (4) au moins un élément différenciateur (12, 18), auquel est appliqué le signal d'excitateur (20) et qui commande l'élément de commutation (6, 14),
la tension de sortie de l'élément différenciateur (12, 18) constituant la dérivation du signal d'excitateur (20).

7. Dispositif selon la revendication 1,
**caractérisé en ce**
**que**, concernant l'élément de commutation (6, 14), il s'agit d'un composant électrique, qui modifie sa conductivité en fonction d'une tension appliquée.
